# EUROPÄISCHE PATENTSCHRIFT

(11) **EP 4 010 228 B1**
(45) Veröffentlichungstag und Bekanntmachung des Hinweises auf die Patenterteilung: **23.04.2025**
(21) Anmeldenummer: 20753689.7
(22) Anmeldetag: 27.07.2020
(51) Int. Cl.: B60R 22/46

(54) **GURTAUFROLLER**
BELT RETRACTOR
RÉTRACTEUR DE CEINTURE DE SÉCURITÉ

(30) Priorität: 07.08.2019 DE 102019211852
(43) Veröffentlichungstag der Anmeldung: 15.06.2022
(60) Teilanmeldung: 24211294.4
(73) Patentinhaber: Autoliv Development AB, 447 83 Vårgårda (SE)
(72) Erfinder: GLAESSER, Antto-Christian, 25474 Hasloh (DE); SÖHNCHEN, Arndt, 22765 Hamburg (DE); EHLERS, Jens, 25358 Horst (DE); PETTERSSON, Lennart, 44737 Vargarda (SE); DAHLQUIST, Bengt, 51631 Dalsjöfors (SE); CIRSTEA, Alexandru, 25335 Elmshorn (DE); LENNARTSSON, Levi, 44737 Vargarda (SE)
(74) Vertreter: Müller Verweyen
(86) Internationale Anmeldenummer: PCT/EP2020/071076
(87) Internationale Veröffentlichungsnummer: WO 2021/023538

(56) Entgegenhaltungen:
- DE-A1- 102017 109 465
- US-A1- 2014 263 808
- US-A1- 2017 259 782

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung an einer Sitzstruktur oder an einer Fahrzeugstruktur und ist dafür aus einem entsprechend dicken Stahlblech hergestellt, welches zu einem U-förmigen Rahmen gebogen ist.

Fahrzeugsitze mit Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden muss. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor oder einer Sensorabschalteinrichtung versehen.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen von Cabriolets der Fall war.

Ein Problem besteht jedoch darin, dass der Gurtaufroller mit seinen weiteren Bauteilen aufgrund seiner Außenabmessungen einen vergleichsweise großen Bauraumbedarf aufweist, so dass der Einbau im Fahrzeugsitz problematisch sein kann. Dies ist insbesondere darauf zurückzuführen, da der Sicherheitsgurt für die aufzunehmenden Zugkräfte bei einer vorgegebenen Breite von z.B. 46 mm eine gewisse Mindestdicke und zur Rückhaltung des Insassen eine gewisse Mindestlänge von z.B. 2500 mm aufweisen muss, so dass der Gurtwickel auf der Gurtspule bei einem vollständig aufgewickelten Sicherheitsgurt aufgrund des aufzuwickelnden Volumens des Sicherheitsgurtes einen entsprechend großen Außendurchmesser aufweist. Dieser große Gurtwickel wird durch einen entsprechend großen Rahmen des Gurtaufrollers und durch weitere Bauteile wie z.B. einer Antriebseinrichtung eines irreversiblen Gurtstraffers, einen Elektromotor eines reversiblen Gurtstraffers, einer Kraftbegrenzungseinrichtung, Sensoreinrichtungen oder dgl. zur Außenseite hin weiter vergrößert, wodurch der Bauraumbedarf nochmals vergrößert wird.

Aus der Druckschrift DE 10 2017 109 465 A1 ist ein dort als Vorspanner bezeichneter Gurtstraffer bekannt, welcher eine Gurtwelle aufweist, auf der ein Endabschnitt des Sicherheitsgurtes aufgewickelt ist. Der Vorspanner weist ferner einen pyrotechnischen Strafferantrieb mit einem in einem Zylinder geführten Kolben auf, welcher über einen Traktionsdraht mit der Gurtwelle verbunden ist. Der Traktionsdraht ist auf der Gurtwelle zu einem Wickel aufgewickelt, seitlich in den Zylinder eingeführt und in dem Zylinder zugfest mit einem Kolben verbunden, der seinerseits einen von einem Gasgenerator mit einem Druckgas beaufschlagbaren Druckraum begrenzt. Der Gasgenerator ist in einem Ende des Zylinders fixiert, welches in einem Winkel von mehr als 180 Grad gegenüber einem Linearabschnitt des Zylinders gekrümmt ist und zwischen dem Linearabschnitt und der Gurtwelle angeordnet ist.

Vor diesem Hintergrund liegt der Erfindung die Aufgabe zugrunde, einen Gurtaufroller mit einem irreversiblen Gurtstraffer bereitzustellen, welcher auch in einem begrenzten Bauraum eines Fahrzeugsitzes angeordnet werden kann.

Zur Lösung der Aufgabe wird ein Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 vorgeschlagen, dass sich der gerade Linearabschnitt parallel zu der Drehachse der Gurtspule und der Längsachse der Baugruppe erstreckt, und das Rohr ein freies Ende aufweist, welches in einem Winkel von 30 bis 90 Grad, vorzugsweise senkrecht zu der Drehachse der Gurtspule ausgerichtet ist, wobei in dem freien Ende ein Gasgenerator gehalten ist.

Weiter wird vorgeschlagen, dass der Gurtaufroller wenigstens einen Steg aufweist, welcher senkrecht zu der Drehachse der Gurtspule angeordnet ist und zur Lagerung des Gurtaufrollers und/oder zur Aufnahme weiterer Bauteile des Gurtaufrollers dient. Durch den Steg kann der Gurtaufroller mit einer größeren Länge ausgeführt werden, ohne dass dadurch die Lagerung verschlechtert wird. Ferner kann der Steg auch alternativ oder zusätzlich zur Aufnahme bzw. zur Halterung weiterer Bauteile dienen.

Weiter wird vorgeschlagen, dass der Gurtaufroller einen Rahmen aufweist, an dem die Stege fixiert sind, und dass das Rohr zwischen den Stegen und dem Rahmen fixiert ist. Die Stege bilden zusammen mit dem Rahmen die Fixierung des Rohres welche sich durch den Zusammenbau des Gurtaufrollers ergibt.

Weiter wird vorgeschlagen, dass der Steg durch zwei oder mehr Gehäuseschalen gebildet ist. Durch die vorgeschlagene Ausbildung des Steges kann dieser dicker ausgeführt werden, wobei sich beide Gehäuseschalen dann erst zu dem Steg ergänzen.

Z.B. kann der pyrotechnische Gurtstraffer ein von der Antriebseinrichtung zu einer Drehbewegung antreibbares Antriebsrad aufweisen, und das Antriebsrad kann in einer zwischen den beiden Gehäuseschalen gebildeten Aufnahme angeordnet sein. Die Gehäuseschalen bilden damit zusammen die Aufnahme für das Antriebsrad, so dass das Antriebsrad und der darum vorgesehene Freiraum z.B. zur Führung der Antriebseinrichtung während der Antriebsbewegung zur Außenseite hin abgedeckt sind. Dadurch kann ferner die Montage vereinfacht werden, indem das Antriebsrad zuerst in den Teil der Aufnahme einer Gehäuseschale eingesetzt wird, und die andere Gehäuseschale anschließend zu Vervollständigung und Fixierung des Antriebsrades angesetzt wird.

Ferner können die beiden Gehäuseschalen jeweils Teilaufnahmen aufweisen, welche sich zu einer Aufnahme ergänzen, in der die Antriebseinrichtung wenigstens abschnittsweise geführt ist und/oder in der das Rohr abschnittsweise gehalten ist. Die Gehäuseschalen bilden damit in der zusammengesetzten Stellung gleich die Halterung für das Rohr und/oder eine Führung für die Antriebseinrichtung vor und während der Eingriffsbewegung in das Antriebsrad. Sofern die Gehäuseschalen zusammen auch die Aufnahme für das Antriebsrad bilden, ist die vorgeschlagene Lösung von besonderem Vorteil, da die Antriebseinrichtung dadurch in einer festen räumlichen Zuordnung auf das Antriebsrad geführt wird.

Weiter wird vorgeschlagen, dass das Rohr in einem in die Aufnahme übergehenden Krümmungsabschnitt gekrümmt ist, und die Aufnahme in einem Übergangsabschnitt tangential zu der Krümmung des Krümmungsabschnittes geformt ist. Das Rohr wird mit dem Krümmungsabschnitt in dem Übergangsabschnitt gehalten oder so daran angeordnet, dass sich der Krümmungsabschnitt unmittelbar an den Übergangsabschnitt anschließt. Das Rohr und die Aufnahme gehen praktisch von dem Krümmungsabschnitt in den Übergangsabschnitt über. Da der Übergangsabschnitt tangential zu dem Krümmungsabschnitt geformt ist, bildet der Übergangsabschnitt praktisch eine Verlängerung des Krümmungsabschnittes des Rohres, ohne dass sich dabei die Krümmung für die Führung der Antriebseinrichtung sprungartig ändert.

Weiter wird vorgeschlagen, dass die Antriebseinrichtung durch eine Mehrzahl von lose aneinander anliegenden Massekörpern gebildet ist, und ein Auffangbehälter vorgesehen ist, in dem die Massekörper nach einer Aktivierung des Gurtstraffers aufgenommen werden. Der Auffangbehälter dient der Bevorratung der Masseköper nach dem Durchlauf durch das Antriebsrad und verhindert dadurch, dass eine nachfolgend auszuführende Funktion des Gurtaufrollers durch sich frei und unkontrolliert bewegende Massekörper gestört werden könnte.

Dabei kann der Auffangbehälter bevorzugt an dem Steg angeordnet sein, so dass der Steg zusätzlich zur Halterung des Auffangbehälters genutzt wird. Dabei kann der Auffangbehälter auch in Form eines Hohlraumes an den Steg bzw. an eine der Gehäuseschalen einstückig angeformt sein. Sofern der Steg gleichzeitig die Aufnahme für das Antriebsrad und die Führung für die Antriebseinrichtung bildet, ist die vorgeschlagene Weiterentwicklung von besonderem Vorteil, da die Massekörper dadurch in einer festen räumlichen Zuordnung nach dem Durchlaufen des Antriebsrades in die Auffangbehälter abgeführt werden. Die Gehäuseschalen bzw. der Steg bildet damit einen vollständigen Führungsweg für die Massekörper ausgehend von der Zuführung aus dem Rohr, über den Durchlauf durch das Antriebsrad bis zu dem Abführen in den Auffangbehälter.

Durch die vorgeschlagenen Lösungen kann der Gasgenerator senkrecht zu der Drehachse der Gurtspule ausgerichtet und montiert sein. Dadurch werden innerhalb oder an der Sitzstruktur keine scharfen Kanten erzeugt und die Anordnung des Gurtstraffers ermöglicht genügend Abstand zum Fahrzeuginsassen, so dass zwischen Gurtstraffer und Insasse eine ausreichend dicke Polsterung des Fahrzeugsitzes möglich ist.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Gurtaufroller in Einzelteilen, in einer Seitenansicht und einer Schnittdarstellung; und
- Fig. 2: den Gurtaufroller aus der Figur 1 in zusammengebautem Zustand in zwei verschiedenen Schrägansichten; und
- Fig. 3: einen aus zwei Gehäuseteilen zusammengesetzten Steg mit einer Aufnahme für ein Antriebsrad in verschiedenen Ansichten; und
- Fig. 4: einen erfindungsgemäßen Gurtaufroller gemäß einer weiteren Ausführungsform.
- Fig. 5: einen erfindungsgemäßen Gurtaufroller mit einem Rohr gemäß einer weiteren Ausführungsform im zusammengebauten Zustand; und
- Fig. 6: den Gurtaufroller der Fig. 5 im demontierten Zustand mit seinen Einzelteilen.

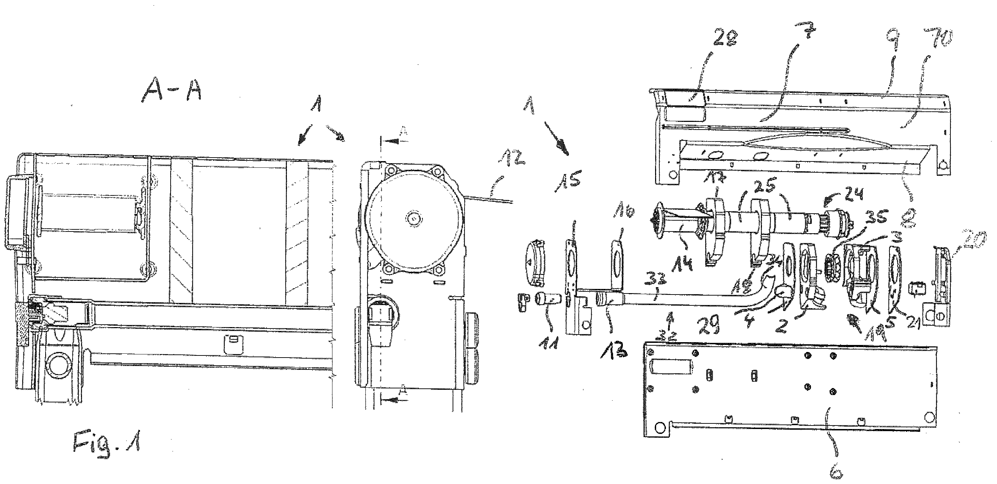

In der Figur 1 ist ein erfindungsgemäßer Gurtaufroller 1 in Einzelteilen und in einem zusammengebauten Zustand zu erkennen. Der Gurtaufroller 1 umfasst als Grundbauteil eine im Querschnitt U-förmige Profilschiene 7, mit einer Basisfläche 10 und zwei gegenüber liegenden, parallel zueinander verlaufenden, von der Basisfläche 10 hochstehenden wandförmigen Schenkeln 8 und 9. Die Profilschiene 7 weist in der Basisfläche 10 und in dem in der Darstellung oberen Schenkel 8 eine Öffnung 28 auf, durch welche ein in der linken Darstellung zu erkennender Sicherheitsgurt 12 zur Außenseite hin herausgeführt ist. Zwischen den Schenkeln 8, 9 und der Basisfläche 10 der Profilschiene 7 ist ein Hohlraum 21 gebildet, in dem die Baugruppen des Gurtaufrollers 1 angeordnet sind, und der durch ein Einsatzteil 6 verschlossen wird. Zu den Baugruppen des Gurtaufrollers gehören eine Gurtspule 14, eine Kraftbegrenzungseinrichtung 25, ein irreversibler Gurtstraffer 24, mehrere Stege 15,16,17,18,19 und 20 und diverse Zusatzteile, wie z.B. weitere Sensoren, Steuereinheiten und elektrische Leitungen die für eine bessere Darstellung der Erfindung nicht dargestellt sind. Ferner können zusätzlich ein reversibler Gurtstraffer oder auch ein Gurtbringer vorgesehen sein. Die Stege 15,16,17,18,19 und 20 stützen sich zwischen den Schenkeln 8, 9, der Basisfläche 10 und bei verschlossenem Hohlraum 21 an dem Einsatzteil 6 ab und bilden die Lagerung und Halterung für den Gurtaufroller 1 bzw. insbesondere für die Gurtspule 14 und der weiteren sich drehenden Teile.

Die Außenabmessungen der Gurtspule 14 mit dem darauf maximal aufgewickelten Sicherheitsgurt 12, sowie die Außenabmessungen der Kraftbegrenzungseinrichtung 25 und des pyrotechnischen Gurtstraffers 24 sind in der Querschnittsfläche senkrecht zu der Drehachse der Gurtspule 14 so gewählt, dass sie nicht größer als die Außenabmessungen des Gurtwickels auf der Gurtspule 14 bei maximal aufgewickelten Sicherheitsgurt 12 sind. Ferner sind die Außenabmessungen nicht größer als die Abmaße des Hohlraumes 21 senkrecht zu der Längserstreckung der Profilschiene 7 sind, so dass der Gurtaufroller 1 mit den Baugruppen in dem Hohlraum 21 der Profilschiene 7 angeordnet werden kann.

Die Stege 15,16,17,18,19 und 20 sind in Form von senkrecht zu der Längserstreckung der Profilschiene 7 ausgerichteten Wandabschnitten ausgebildet, welche sich von einem der Schenkel 8 oder 9 bis zu dem jeweils anderen Schenkel 8 oder 9 der Profilschiene 7 erstrecken und mit diesen verbunden sind. Ferner können sich die Stege 15,16,17,18,19 und 20 bis zu der Basisfläche 10 der Profilschiene 7 erstrecken und damit die gesamte Querschnittsfläche der Profilschiene 7 ausfüllen. Die Stege 15,16,17,18,19 und 20 weisen jeweils eine oder mehrere Öffnungen oder Ansätze auf, in denen der Gurtaufroller 1 bzw. Teile davon wie z.B. die Gurtspule 14 gelagert, befestigt und/oder hindurchgeführt sind. Ferner kann z.B. einer der Stege 15,16,17,18,19 und 20 auch eine Verzahnung oder eine andersartige Blockiergestaltung aufweisen, in denen die Gurtspule 14 oder andere Teile des Gurtaufrollers blockierbar sind. Außerdem können die Stege 15,16,17,18,19 und 20 auch zusätzliche Hohlräume zur Aufnahme von weiteren Bauteilen des Gurtaufrollers wie z.B. pyrotechnische Treibsätze für den pyrotechnischen Gurtstraffer 24, elektronische Bauteile wie z.B. Sensoren, elektronische Steuereinheiten oder Speichereinheiten aufweisen. Sofern die Stege 15,16,17,18,19 und 20 sich von einem der Schenkel 8 oder 9 bis zu dem jeweils anderen Schenkel 8 oder 9 erstrecken, können die Stege 15,16,17,18,19 und 20 zusätzlich zur Versteifung der Profilschiene 7 genutzt werden, was wiederum für die Lastaufnahme und die Formstabilität der Profilschiene 7 im Rückhaltefall des Insassen von Vorteil ist. Die Bauteile des Gurtaufrollers 1 sind bewusst koaxial und hintereinander angeordnet, so dass die Baugruppen die Außenabmaße des Gurtaufrollers radial nach außen nicht vergrößern, und der Gurtaufroller 1 auch in dem schmalen, länglichen Hohlraum 21 der Profilschiene 7 angeordnet werden kann.

Die Profilschiene 7 bildet zusammen mit dem Einsatzteil 6 in der zusammengesetzten Stellung einen Rahmen mit einem im Querschnitt viereckigen länglichen Hohlraum 21. Da die Gurtspule 14 mit dem darauf aufgewickelten Sicherheitsgurt 12 und die weiteren Baugruppen im Querschnitt kreisförmig ausgebildet sind, sind zwischen dem Gurtwickel der Gurtspule 14, den Baugruppen und der Profilschiene 7 und dem Einsatzteil 6 in den Ecken jeweils ein länglicher im Querschnitt in etwa dreieckförmiger Freiraum vorgesehen, welcher hier zur Anordnung eines Rohres 32 des pyrotechnischen irreversiblen Gurtstraffers 24 genutzt wird. Das Rohr 32 dient zur Führung einer Antriebseinrichtung, wie z.B. einer Kette aus lose aneinander anliegenden Massekörpern, oder eines elastischen Antriebsstranges, welche bzw. welcher bei einer Aktivierung des pyrotechnischen Gurtstraffers 24 beschleunigt und dadurch in Antriebsverbindung mit einem Antriebsrad 35 gebracht wird. Das Antriebsrad 35 ist über eine Verzahnung oder ein Polygonprofil drehfest mit der Gurtspule 14 verbunden, so dass die Gurtspule 14 durch die Antriebsbewegung über das Antriebsrad 35 zu einer Drehbewegung in Aufwickelrichtung des Sicherheitsgurtes 12 angetrieben wird, und der Sicherheitsgurt 12 gestrafft wird. Das Rohr 32 weist einen Linearabschnitt 33 und einen Krümmungsabschnitt 34 auf und ist derart ausgerichtet und angeordnet, dass es mit dem Linearabschnitt 33 parallel zu der Drehachse der Gurtspule 14 und der Längsachse der Kraftbegrenzungseinrichtung 25 angeordnet ist. Ferner ist der Linearabschnitt 33 so lang bemessen, dass er sich ausgehend von dem an dem linken Steg 15 gehaltenen freien Ende seitlich der Gurtspule 14 und seitlich der Kraftbegrenzungseinrichtung 25 erstreckt und dabei einen dreieckigen Freiraum zwischen dem Gurtwickel und dem in der Darstellung unteren Schenkel 8 und dem Einsatzteil 6 ausfüllt. Der Krümmungsabschnitt 34 ist so geformt, dass die Antriebseinrichtung aus der Linearbewegung in dem Linearabschnitt 33 in Richtung einer Umfangsbewegung in dem Antriebsrad 35 umgelenkt wird.

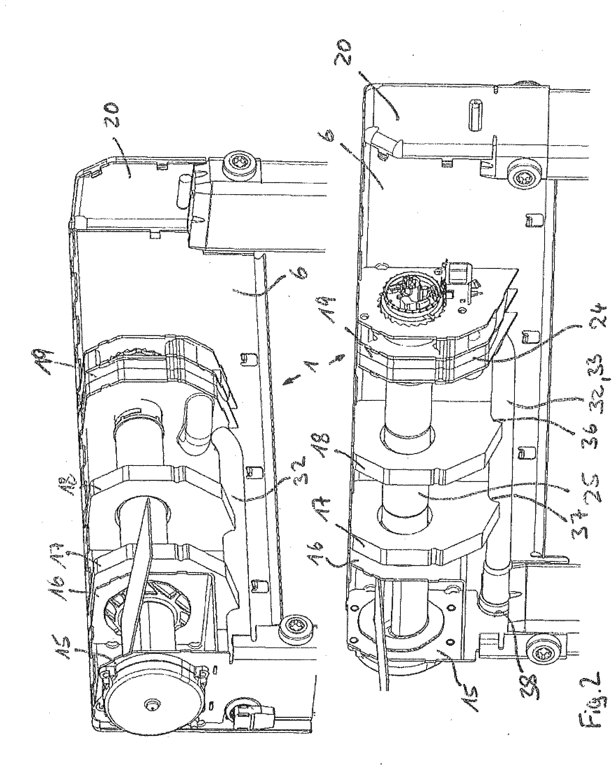

In den Darstellungen der Figur 2 ist der Gurtaufroller 1 ohne die Profilschiene 7 nur mit dem Einsatzteil 6 und den Baugruppen zu erkennen. Die hinzuzudenkende Profilschiene 7 und das Einsatzteil 6 bilden zusammen einen Rahmen für den Gurtaufroller 1 der die Baugruppen des Gurtaufrollers 1 zu der Außenseite hin abdeckt und die Halterung für die Stege 15,16,17,18,19 und 20 bildet. Ferner ist das Rohr 32 mit dem Linearabschnitt 33 in drei Ausnehmungen 36,37 und 38 der Stege 18,17 und 15 gegen ein seitliches Verrutschen gesichert und wird dann durch den Rahmen, welcher durch die hinzuzudenkende Profilschiene 7 gebildet wird, zu Außenseite hin abgedeckt. Das Rohr 32 ist dadurch mit dem Linearabschnitt 33 zwischen den Stegen 18,17 und 15 und dem unteren Schenkel 8 der Profilschiene 7 fixiert.

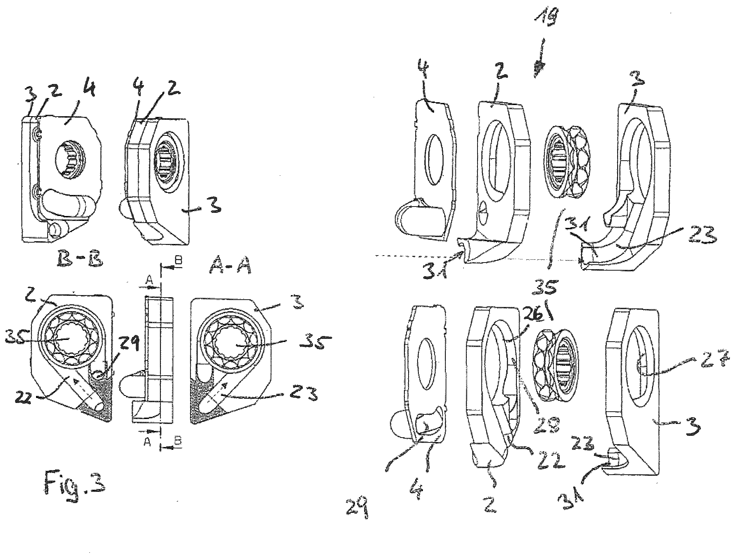

In der Figur 3 ist der Steg 19 in einer vergrößerten Darstellung zu erkennen. Der Steg 19 ist durch zwei Gehäuseschalen 2 und 3 mit jeweils einer Abdeckplatte 4 und 5 gebildet, wobei die Abdeckplatte 5 nur in der Figur 1 zu erkennen ist. Die Gehäuseschalen 2 und 3 weisen jeweils eine kreisförmige Teilaufnahme 27 und 28 mit einem im Querschnitt viertelkreisförmigen Radius auf, welche sich in der zusammengesetzten Form der Gehäuseschalen 2 und 3 zu einer Aufnahme 26 für das Antriebsrad 35 mit einer im Querschnitt halbkreisförmigen umlaufenden Führung für die Antriebseinrichtung ergänzen. Ferner weisen die Gehäuseschalen 2 und 3 jeweils eine weitere Teilaufnahme 22 und 23 auf, welche in der zusammengesetzten Form der Gehäuseschalen 2 und 3 einen Führungskanal für die Antriebseinrichtung bilden. Die Teilaufnahmen 22 und 23 umfassen an der Einlaufseite jeweils einen gekrümmten Übergangsabschnitt 31, welcher so geformt ist, dass das Rohr 32 mit seinem freien Ende darin tangential übergeht bzw. tangential darin gehalten ist. Die Übergangsabschnitte 31 erstrecken sich aus den Ebenen der Gehäuseschalen 2 und 3 in Richtung des Rohres 32 und bilden zusammen einen gekrümmten Einlaufkanal mit einer der Krümmung des anliegenden Rohres 32 entsprechenden Krümmung. Im weiteren Verlauf sind die Teilaufnahmen 22 und 23 so geformt, dass sie in der zusammengesetzten Form einen tangential auf den Außenumfang des Antriebsrades 35 gerichteten Führungskanal bilden und an der Austrittsseite einen tangential von dem Antriebsrad 35 wegführen Führungskanal bilden.

Ferner weist die in der Darstellung linke Abdeckplatte 4 einen Hohlraum auf, der einen Auffangbehälter 29 zur Aufnahme der Antriebseinrichtung, z.B. der losen Massekörper nach dem Durchlauf durch das Antriebsrad 35 bildet. Der Steg 19 bildet damit durch die zusammengesetzten Gehäuseschalen 2 und 3 mit der Abdeckplatte 4 die Aufnahme 26 für das Antriebsrad 35 und außerdem eine vollständige Führung und Aufnahme der Antriebseinrichtung ausgehend von dem Austritt aus dem Rohr 32 bis zu einem Abführen in den Auffangbehälter in einer festen räumlichen Zuordnung zu dem Antriebsrad 35.

Die Gehäuseschalen 2 und 3 sind als massive blockartige Wände mit einer komplexen Formgebung durch die Teilaufnahmen 22,23,27 und 28 verwirklicht und können z.B. in Form eines Kunststoffspritzgussteils verwirklicht sein, während die Abdeckplatten 4 und 5 jeweils durch ein Metallstanzteil gebildet sind.

An der in der Darstellung der Figur 1 zu erkennenden rechten Abdeckplatte 5 ist ferner eine weitere Halteplatte 21 vorgesehen, welche sich ebenfalls an der Profilschiene 7 und dem Abdeckteil 6 abstützt und unter anderem zur Halterung eines fahrzeugsensitiven Sensors dient.

Der Linearabschnitt 33 des Rohres 32 ist so lang bemessen und angeordnet, dass er sich parallel zu der Drehachse der Gurtspule 14 über die gesamte Längsseite der Gurtspule 14 und parallel zu der Drehachse bzw. Längsachse der Kraftbegrenzungseinrichtung 25 über die gesamte Länge der Kraftbegrenzungseinrichtung 25 erstreckt. Die Länge beträgt bevorzugt 7 bis 15 cm und ermöglicht eine sehr hohe Linearbeschleunigung der Antriebseinrichtung in der Anfangsphase der Aktivierung des irreversiblen Gurtstraffers 25 bevor die Antriebseinrichtung zum Eingriff in das Antriebsrad 35 gelangt.

Neben der beschriebenen vorteilhaften Geometrie und Anordnung des Rohres 32 bildet die Führung und Aufnahme der Antriebseinrichtung und des Antriebsrades 35 in dem Steg 19 eine davon unabhängige Erfindung. Insbesondere ermöglicht die vorgeschlagene Führung und Aufnahme der Antriebseinrichtung und des Antriebsrades 35 in dem Steg 19 aufgrund der festen räumlichen Zuordnung eine sehr genaue Führung und Ausrichtung der Antriebseinrichtung zu dem Antriebsrad 35. Ferner kann die Führung besonders kostengünstig verwirklicht werden, indem der Steg 19 aus zwei Gehäuseschalen 2 und 3 mit den jeweils darin vorgesehenen Teilaufnahmen 22,23,27 und 28 z.B. als Kunststoffspritzteil ausgebildet ist, welche dann durch das Zusammensetzen die Aufnahme 26 und die Führung für das Antriebsrad 35 und die Antriebseinrichtung bilden. Dabei bilden die Gehäuseschalen 2 und 3 in der zusammengesetzten Stellung die Führung der Antriebseinrichtung zu dem Antriebsrad 35, während des Durchlaufens des Antriebsrades 35 und auch in der Abführung von dem Antriebsrad 35 in den Auffangbehälter 29. Der Steg 19 mit den beiden Gehäuseschalen 2 und 3 weist damit eine Dicke auf, welche mindestens der Breite der Antriebseinrichtung entspricht. Aufgrund der notwendigen großen Breite des Steges 19 bildet dieser ferner zusätzlich eine erhöhte Versteifung des Rahmens gebildet durch den Verbund aus der Profilschiene 7 und dem Einsatzteil 6 aus. Dabei weist der Steg 19 alle Teile der Führung der Antriebseinrichtung einschließlich den Auffangbehälter 29 auf und kann als Baugruppe vormontiert und dann in die Profilschiene 7 eingesetzt werden. Das Antriebsrad 35 muss anschließend nur noch entweder bereits in der mit der Gurtspule 14 verbundenen Stellung oder als Einzelteil in die Aufnahme 26 eingeschoben werden.

Das Rohr 32 weist an seinem linken freien Ende den darin gehaltenen Gasgenerator 11 auf und ist mit dem freien Ende an dem linken stirnseitigen Steg 15 des Gurtaufrollers 1 entgegen der Zugrichtung aus dem Gurtaufroller 1 festgelegt, so dass sich das Rohr 32 bei einer Aktivierung des Gasgenerators 11 an der Innenseite des Steges 15 abstützt, und die Reaktionskräfte in den Rahmen des Gurtaufrollers 1 weitergeleitet werden.

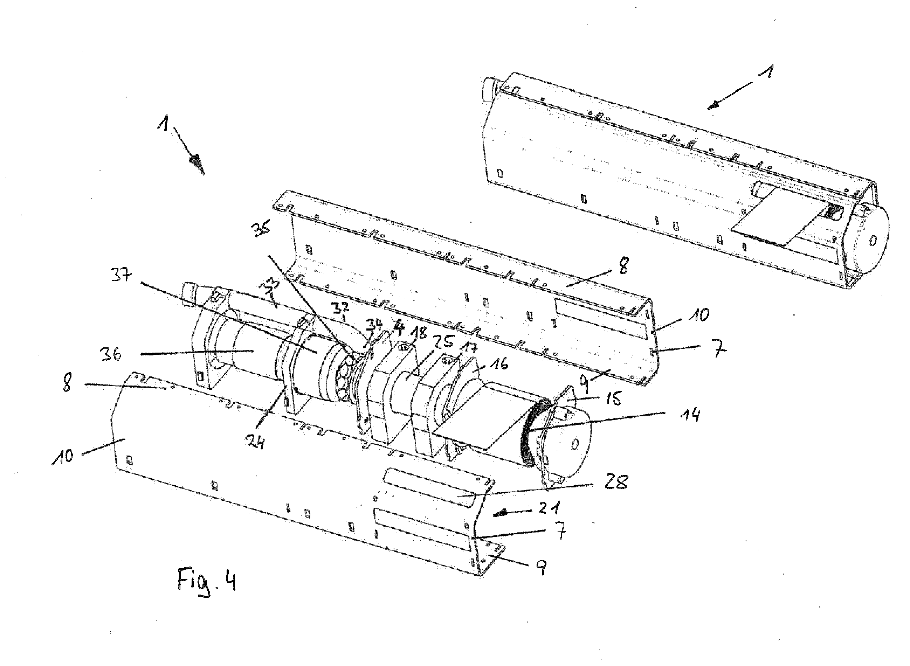

In der Figur 4 ist ein weiteres Ausführungsbeispiel der Erfindung dargestellt. Der Gurtaufroller 1 weist hier zusätzlich einen reversiblen Gurtstraffer mit einem Elektromotor 36 und einem Getriebe 37 auf, welcher zusätzlich auch zur Verwirklichung weiterer Funktionen wie einer Verstellung der auf die Gurtspule 14 ausgeübten Rückzugskraft zu Komfortzwecken oder auch zur Verwirklichung einer Wickelhilfe des Sicherheitsgurtes in die Parkposition ausgebildet sein kann. Der Elektromotor 36 und das Getriebe 37 sind koaxial und in Reihe zu der Gurtspule 14 angeordnet, wodurch ein sehr schlanker und länglicher Aufbau des Gurtaufrollers 1 z.B. zu einer Anordnung des Gurtaufrollers 1 in sehr schmalen Bauräumen der Fahrzeugstruktur oder eines Fahrzeugsitzes erreicht werden kann. Das Rohr 32 des irreversiblen Gurtstraffers 25 ist hier so ausgerichtet, dass sich der Linearabschnitt 33 parallel zu der Drehachse der Gurtspule 14 und von der Gurtspule 14 weg erstreckt. Dabei ist der Linearabschnitt 33 in der Länge so bemessen, dass er sich seitlich des Getriebes 37 und des Elektromotors 37 unter Ausnutzung des in der Ecke der Profilschiene 7 vorhandenen Freiraumes erstreckt und dadurch möglichst lang bemessen ist. Damit wird die in dem Rohr 32 geführte Antriebseinrichtung über einen möglichst langen Weg linear und geradlinig beschleunigt, bevor sie zur Übertragung der Antriebsbewegung zum Eingriff in das Antriebsrad 35 gelangt.

Beiden beschriebene Ausführungsbeispielen ist gemeinsam, dass die Baugruppen des Gurtaufrollers 1, wie Gurtspule 14, Kraftbegrenzungseinrichtung 25 und Antriebsrad 35 sowie in dem zweiten Ausführungsbeispiel das Getriebe 37 und der Elektromotor 36 koaxial zu der Drehachse der Gurtspule 14 und in Reihe zu der Gurtspule 14 angeordnet sind, so dass der Gurtaufroller 1 möglichst lang und schmal ausgebildet ist. Dieser vorteilhafte längliche Grundaufbau des Gurtaufrollers 1 wird nun dazu genutzt das Rohr 32 mit einem möglichst langen Linearabschnitt 33 zu versehen, welcher dann parallel zu der Drehachse der Gurtspule 14 und seitlich der Gurtspule 14 und einer weiteren Baugruppe wie z.B. der Kraftbegrenzungseinrichtung 25 oder seitlich des Getriebes 37 und des Elektromotors 37 angeordnet ist. Dabei wird vorteilhaft ein freier Bauraum in einer der Ecken der Profilschiene 7 zur Anordnung des Linearabschnittes 33 des Rohres 32 ausgenutzt.

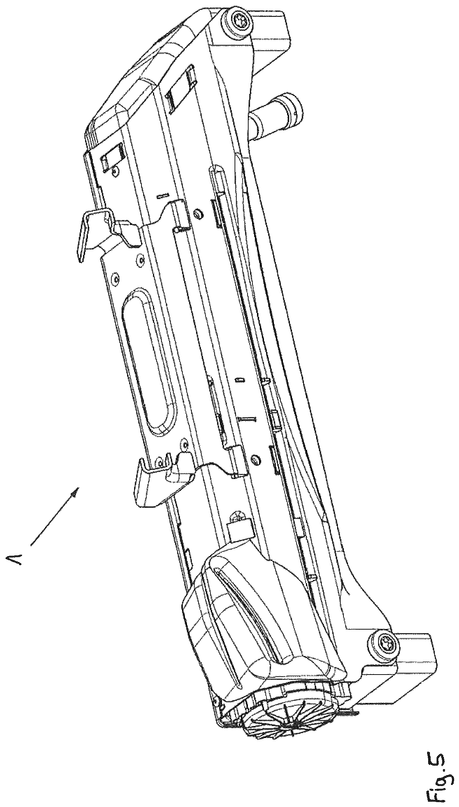

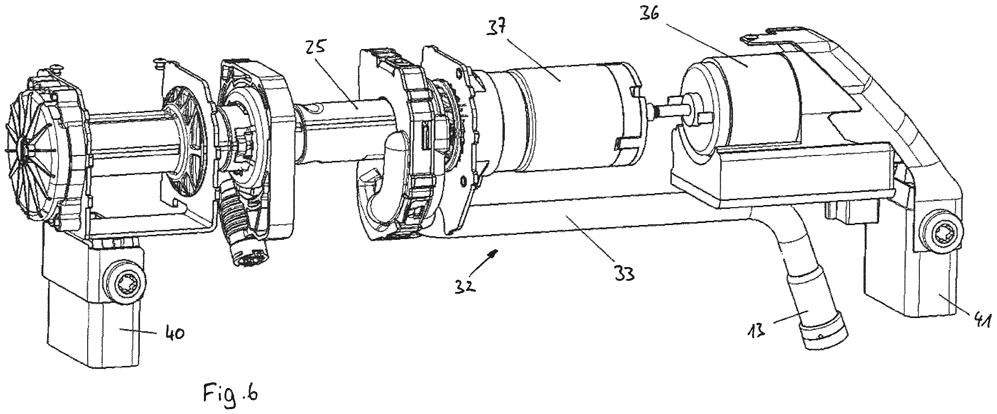

In den Figuren 5 und 6 ist ein weiteres Ausführungsbeispiel der Erfindung zu erkennen. Der Gurtaufroller 1 entspricht in seinem Grundaufbau dem in der Figur 4 gezeigten Gurtaufroller 1, so dass insoweit auf die zu der Figur 4 zugehörige Beschreibung verwiesen wird. Die Ausführungsform der Figuren 5 und 6 unterscheidet sich von der Ausführungsform der Figur 4 dadurch, dass das freie Ende 13 des Rohres 32, in dem der Gasgenerator 11 gehalten ist, gegenüber der Drehachse der Gurtspule 14 in einem Winkel von ca. 30 bis 90 Grad abgewinkelt ist. Ferner weist der Gurtaufroller 1 zwei senkrecht zu der Drehachse der Gurtspule 14 vorstehende Befestigungsansätze 40 und 41 auf, über welche der Gurtaufroller 1 an einem nicht dargestellten Fahrzeugsitz befestigbar ist. Der Gurtaufroller 1 wird über die Befestigungsansätze 40 und 41 bevorzugt an der Oberseite des Fahrzeugsitzes befestigt, so dass der aus dem Gurtaufroller 1 herausgeführte Sicherheitsgurt dem Insassen über die Schulter zugeführt wird. Das freie Ende 13 des Rohres 32 ist so abgewinkelt, dass es sich zwischen den Befestigungsansätzen 40 und 41 radial nach außen von dem Gurtaufroller 1 weg erstreckt. Der Vorteil dieser Lösung ist darin zu sehen, dass ein möglicherweise austretender Gasstrom bei der Aktivierung des Gasgenerators 11 in den Fahrzeugsitz hinein gelenkt wird und nicht seitlich aus dem Fahrzeugsitz austritt, und die Insassen vor dem Gasstrom geschützt sind.

## Patentansprüche

1. Gurtaufroller (1) mit
- einer Gurtspule (14),
- einem darauf zu einem Gurtwickel aufwickelbaren Sicherheitsgurt (12), und
- einem pyrotechnischen Gurtstraffer (24) mit einer zu einer Antriebsbewegung antreibbaren, in einem Rohr (32) geführten Antriebseinrichtung, und
- wenigstens einer ersten koaxial zu der Drehachse der Gurtspule (14) und in Reihe zu der Gurtspule (14) angeordneten weiteren Baugruppe, und
- das Rohr (32) einen geraden Linearabschnitt (33) aufweist, welcher an der Seite der Gurtspule (14) und der weiteren Baugruppe angeordnet ist, wobei der Linearabschnitt (33) in der Länge derart bemessen ist, dass er sich über die Länge der Gurtspule (14) in Richtung der Drehachse der Gurtspule (14) und über die Länge der weiteren Baugruppe in Richtung der Längsachse erstreckt, **dadurch gekennzeichnet, dass**
- sich der gerade Linearabschnitt (33) parallel zu der Drehachse der Gurtspule (14) und der Längsachse der Baugruppe erstreckt und
- das Rohr (32) ein freies Ende (13) aufweist, welches in einem Winkel von 30 bis 90 Grad, vorzugsweise senkrecht zu der Drehachse der Gurtspule (14) ausgerichtet ist, wobei
- in dem freien Ende (13) ein Gasgenerator (11) gehalten ist..

2. Gurtaufroller (1) nach Anspruch 1, **dadurch gekennzeichnet, dass**
- der Gurtaufroller (1) wenigstens einen Steg (15,16,17,18,19,20) aufweist, welcher senkrecht zu der Drehachse der Gurtspule (14) angeordnet ist und zur Lagerung des Gurtaufrollers (1) und/oder zur Aufnahme weiterer Bauteile des Gurtaufrollers (1) dient.

3. Gurtaufroller nach Anspruch 2, **dadurch gekennzeichnet, dass**
- der Gurtaufroller (1) einen durch eine Profilschiene (7) gebildeten Rahmen aufweist, an dem die Stege (15,16,17,18,19,20) fixiert sind, und
- das Rohr (32) zwischen den Stegen (15,16,17,18,19,20) und dem Rahmen fixiert ist.

4. Gurtaufroller (1) nach Anspruch 2 oder 3, **dadurch gekennzeichnet, dass**
- wenigstens ein Steg (15,16,17,18,19,20) durch zwei oder mehr Gehäuseschalen (2,3) gebildet ist.

5. Gurtaufroller (1) nach Anspruch 4, **dadurch gekennzeichnet, dass**
- der pyrotechnische Gurtstraffer (24) ein von der Antriebseinrichtung zu einer Drehbewegung antreibbares Antriebsrad (35) aufweist, und
- das Antriebsrad (35) in einer zwischen den beiden Gehäuseschalen (2,3) gebildeten Aufnahme (26) angeordnet ist.

6. Gurtaufroller (1) nach einem der Ansprüche 4 oder 5,
**dadurch gekennzeichnet, dass**
- die beiden Gehäuseschalen (2,3) jeweils Teilaufnahmen (22,23,27,28) aufweisen, welche sich zu der Aufnahme (26) ergänzen, in der die Antriebseinrichtung wenigstens abschnittsweise geführt ist und/oder in der das Rohr (32) abschnittsweise gehalten ist.

7. Gurtaufroller (1) nach Anspruch 6, **dadurch gekennzeichnet, dass**
- das Rohr (32) in einem in die Aufnahme (26) übergehenden Krümmungsabschnitt (34) gekrümmt ist, und
- die Aufnahme (26) in einem Übergangsabschnitt (31) tangential zu der Krümmung des Krümmungsabschnittes (34) geformt ist.

8. Gurtaufroller (1) nach einem der vorangegangenen Ansprüche, **dadurch gekennzeichnet, dass**
- die Antriebseinrichtung durch eine Mehrzahl von lose aneinander anliegenden Massekörpern gebildet ist, und
- ein Auffangbehälter (29) vorgesehen ist, in dem die Massekörper nach einer Aktivierung des irreversiblen Gurtstraffers (24) aufgenommen werden.

9. Gurtaufroller (1) nach Anspruch 8 und nach einem der Ansprüche 2 bis 7, **dadurch gekennzeichnet, dass**
- der Auffangbehälter (29) an dem Steg (15,16,17,18,19,20) angeordnet ist.

10. Gurtaufroller (1) nach einem der Ansprüche 1 bis 9,
**dadurch gekennzeichnet, dass**
- der Gurtaufroller (1) zwei abgewinkelte, radial zu der Drehachse der Gurtspule (14) vorstehende Befestigungsansätze (40,41) aufweist, und
- das freie Ende (13) des Rohres (32) sich zwischen den Befestigungsansätzen (40,41) radial nach außen erstreckt.

## Claims

1. Belt retractor (1) comprising
- a belt reel (14),
- a seat belt (12) that can be wound thereon to form a wound belt, and
- a pyrotechnic belt tensioner (24) comprising a drive device which is guided in a tube (32) and can be driven to perform a drive movement, and
- at least a first further assembly which is arranged coaxially with the rotational axis of the belt reel (14) and in series with the belt reel (14), and
- the tube (32) has a straight linear portion (33) which is arranged on the side of the belt reel (14) and of the further assembly, the linear portion (33) being dimensioned in length such that it extends over the length of the belt reel (14) in the direction of the rotational axis of the belt reel (14) and over the length of the further assembly in the direction of the longitudinal axis,
**characterized in that**
- the straight linear portion (33) extends parallel to the rotational axis of the belt reel (14) and the longitudinal axis of the assembly and
- the tube (32) has a free end (13) which is oriented at an angle of 30 to 90 degrees, preferably perpendicularly to the rotational axis of the belt reel (14),
- a gas generator (11) being held in the free end (13).

2. Belt retractor (1) according to claim 1, **characterized in that**
- the belt retractor (1) comprises at least one support partition (15, 16, 17, 18, 19, 20) which is arranged perpendicularly to the rotational axis of the belt reel (14) and is intended for mounting the belt retractor (1) and/or for receiving further components of the belt retractor (1).

3. Belt retractor according to claim 2, **characterized in that**
- the belt retractor (1) comprises a frame formed by a profile rail (7), on which frame the support partitions (15, 16, 17, 18, 19, 20) are fixed, and
- the tube (32) is fixed between the support partitions (15, 16, 17, 18, 19, 20) and the frame.

4. Belt retractor (1) according to either claim 2 or claim 3, **characterized in that**
- at least one support partition (15, 16, 17, 18, 19, 20) is formed by two or more housing shells (2, 3).

5. Belt retractor (1) according to claim 4, **characterized in that**
- the pyrotechnic belt tensioner (24) comprises a drive wheel (35) which can be driven by the drive device to perform a rotational movement, and
- the drive wheel (35) is arranged in a receptacle (26) formed between the two housing shells (2, 3).

6. Belt retractor (1) according to either claim 4 or claim 5, **characterized in that**
- the two housing shells (2, 3) each comprise partial receptacles (22, 23, 27, 28) which make up the receptacle (26) in which the drive device is guided at least in portions and/or in which the tube (32) is held in portions.

7. Belt retractor (1) according to claim 6, **characterized in that**
- the tube (32) is curved in a curved portion (34) transitioning into the receptacle (26), and
- the receptacle (26) is formed tangentially to the curvature of the curved portion (34) in a transition portion (31).

8. Belt retractor (1) according to any of the preceding claims,
**characterized in that**
- the drive device is formed by a plurality of loosely abutting mass bodies, and
- a collecting vessel (29) is provided in which the mass bodies are received after activating the irreversible belt tensioner (24).

9. Belt retractor (1) according to claim 8 and according to any of claims 2 to 7, **characterized in that**
- the collecting vessel (29) is arranged on the support partition (15, 16, 17, 18, 19, 20).

10. Belt retractor (1) according to any of claims 1 to 9, **characterized in that**
- the belt retractor (1) comprises two angled fastening lugs (40, 41) which project radially with respect to the rotational axis of the belt reel (14), and
- the free end (13) of the tube (32) extends radially outward between the fastening lugs (40, 41).

## Revendications

1. Enrouleur de ceinture (1) comportant
- une bobine de ceinture (14),
- une ceinture de sécurité (12) pouvant être enroulée sur celle-ci pour former un enroulement de ceinture, et
- un tendeur de ceinture (24) pyrotechnique comportant un dispositif d'entraînement pouvant être entraîné en un mouvement d'entraînement et guidé dans un tube (32), et
- au moins un premier ensemble structural supplémentaire disposé coaxialement à l'axe de rotation de la bobine de ceinture (14) et en série avec la bobine de ceinture (14), et
- le tube (32) présente une section linéaire (33) droite disposée sur le côté de la bobine de ceinture (14) et de l'ensemble structural supplémentaire, dans lequel la section linéaire (33) est dimensionnée en longueur de manière à s'étendre sur la longueur de la bobine de ceinture (14) dans la direction de l'axe de rotation de la bobine de ceinture (14) et sur la longueur de l'ensemble structural supplémentaire dans la direction de l'axe longitudinal, **caractérisé en ce que**
- la section linéaire (33) droite s'étend parallèlement à l'axe de rotation de la bobine de ceinture (14) et à l'axe longitudinal de l'ensemble structural, et
- le tube (32) présente une extrémité libre (13) qui est orientée suivant un angle de 30 à 90 degrés, de préférence perpendiculairement à l'axe de rotation de la bobine de ceinture (14), dans lequel
- un générateur de gaz (11) est maintenu dans l'extrémité libre (13).

2. Enrouleur de ceinture (1) selon la revendication 1, **caractérisé en ce que**
- l'enrouleur de ceinture (1) présente au moins une barrette (15, 16, 17, 18, 19, 20) qui est disposée perpendiculairement à l'axe de rotation de la bobine de ceinture (14) et qui est destinée à loger l'enrouleur de ceinture (1) et/ou à loger des éléments structuraux supplémentaires de l'enrouleur de ceinture (1).

3. Enrouleur de ceinture selon la revendication 2, **caractérisé en ce que**
- l'enrouleur de ceinture (1) présente un cadre formé par un rail profilé (7), sur lequel les barrettes (15, 16, 17, 18, 19, 20) sont fixées, et
- le tube (32) est fixé entre les barrettes (15, 16, 17, 18, 19, 20) et le cadre.

4. Enrouleur de ceinture (1) selon la revendication 2 ou 3,
**caractérisé en ce que**
- au moins une barrette (15, 16, 17, 18, 19, 20) est formée par deux coques de boîtier (2, 3) ou plus.

5. Enrouleur de ceinture (1) selon la revendication 4, **caractérisé en ce que**
- le tendeur de ceinture (24) pyrotechnique présente une roue d'entraînement (35) pouvant être entraînée en un mouvement de rotation par le dispositif d'entraînement, et
- la roue d'entraînement (35) est disposée dans un logement (26) formé entre les deux coques de boîtier (2, 3).

6. Enrouleur de ceinture (1) selon l'une des revendications 4 ou 5,
**caractérisé en ce que**
- les deux coques de boîtier (2, 3) présentent respectivement des logements partiels (22, 23, 27, 28) qui se complètent pour former le logement (26) dans lequel le dispositif d'entraînement est guidé au moins dans certaines sections et/ou dans lequel le tube (32) est maintenu dans certaines sections.

7. Enrouleur de ceinture (1) selon la revendication 6, **caractérisé en ce que**
- le tube (32) est courbé dans une section de courbure (34) se prolongeant dans le logement (26), et
- le logement (26) est formé dans une section de transition (31) tangentiellement à la courbure de la section de courbure (34).

8. Enrouleur de ceinture (1) selon l'une des revendications précédentes,
**caractérisé en ce que**
- le dispositif d'entraînement est formé par une pluralité de corps de masse s'appuyant de manière lâche les uns contre les autres, et
- un récipient collecteur (29) est prévu, dans lequel les corps de masse sont reçus après une activation du tendeur de ceinture (24) irréversible.

9. Enrouleur de ceinture (1) selon la revendication 8 et selon l'une des revendications 2 à 7, **caractérisé en ce que**
- le récipient collecteur (29) est disposé sur la barrette (15, 16, 17, 18, 19, 20).

10. Enrouleur de ceinture (1) selon l'une des revendications 1 à 9,
**caractérisé en ce que**
- l'enrouleur de ceinture (1) présente deux pattes de fixation (40, 41) coudées, faisant saillie radialement par rapport à l'axe de rotation de la bobine de ceinture (14), et
- l'extrémité libre (13) du tube (32) s'étend radialement vers l'extérieur entre les pattes de fixation (40, 41).
